# EUROPÄISCHE PATENTSCHRIFT

(11) **EP 1 144 238 B1**
(45) Veröffentlichungstag und Bekanntmachung des Hinweises auf die Patenterteilung: **15.01.2003**
(21) Anmeldenummer: 00972880.9
(22) Anmeldetag: 30.10.2000
(51) Int. Cl.: B62D 9/00, B62D 6/02, A01B 51/02

(54) **VERFAHREN ZUM LENKEN UND ANTREIBEN EINER SELBSTFAHRENDEN ARBEITSMASCHINE UND SELBSTFAHRENDE ARBEITSMASCHINE**
METHOD FOR STEERING AND DRIVING A SELF-PROPELLED WORKING MACHINE AND SELF-PROPELLED WORKING MACHINE
PROCEDE DE CONDUITE ET D'ENTRAINEMENT D'UNE MACHINE DE TRAVAIL AUTOMOTRICE ET MACHINE DE TRAVAIL AUTOMOTRICE

(30) Priorität: 29.10.1999 DE 19952149
(43) Veröffentlichungstag der Anmeldung: 17.10.2001
(73) Patentinhaber: GKN Walterscheid GmbH, 53797 Lohmar (DE)
(72) Erfinder: KROMBHOLZ, Klaus, 78333 Stockach (DE)
(74) Vertreter: Harwardt, Günther, Dipl.-Ing.
(86) Internationale Anmeldenummer: EP0010668
(87) Internationale Veröffentlichungsnummer: WO01030636

(56) Entgegenhaltungen:
- DE-A- 19 517 571
- DE-U- 9 102 354

## Beschreibung

Die Erfindung betrifft ein Verfahren zum Lenken und Antreiben einer selbstfahrenden Arbeitsmaschine, insbesondere einer Landmaschine, sowie eine selbsfahrende Arbeitsmaschine mit stets um eine gemeinsame Drehachse antreibbaren Vorderrädern und lenkbaren Hinterrädern, wobei die Vorräder mit unterschiedlichen Drehzahlen angetrieben werden können.

Aus der DE 91 02 354 U1 ist eine solche Arbeitsmaschine in Gestalt einer landwirtschaftlichen Mähmaschine bekannt, bei der die Vorderräder mittels hydrostatischer Einzelradantriebe angetrieben sind. An einem Lenkgestänge eines lenkbaren Hinterrades wird die Lenkstellung des Hinterrades erfaßt und mittels elektrischer Signale an einen Regler der hydrostatischen Einzelradantriebe weitergeleitet. An den Einzelradantrieben wird der Hydraulikstrom so geregelt, daß sich eine der Lenkstellung des Hinterrades entsprechende Drehzahldifferenz an den Vorderrädern einstellt.

Aus der gattungsbildenden DE 195 17 571 A1 ist eine selbstfahrende Arbeitsmaschine mit angetriebenen Vorderrädern und einem lenkbaren Hinterrad bekannt, wobei die Vorderräder mit unterschiedlichen Drehzahlen antreibbar sind. Dem Hinterrad ist eine Gebereinrichtung zugeordnet, die dem Lenkeinschlag des Hinterrades entsprechende Steuerimpulse automatisch an eine Steuereinrichtung für den Antrieb der Vorderräder übermittelt. Die Zuschaltung der automatischen Steuerung der Drehzahldifferenz an den Vorderrädern kann hierbei erst ab einem vorgegebenen Lenkeinschlag des Hinterrades erfolgen.

Die bekannten selbstfahrenden Arbeitsmaschinen weisen erfahrungsgemäß nur bis etwa 25 km/h ein unter Beachtung des Sicherheitsaspektes akzeptables Fahrverhalten auf. Bei höheren Geschwindigkeiten weisen solche selbstfahrenden Arbeitsmaschinen Lenkunstabilitäten auf.

Landmaschinen, wie z.B. Mähdrescher oder Feldhäcksler, weisen in der Regel starre, ungelenkte Vorderräder und gelenkte Hinterräder auf. Durch den Anbau masseintensiver Anbaugruppen, wie z.B. Erntegutaufnehmer, vor der Vorderachse liegt auch die Hauptlast solcher Landmaschinen auf der Vorderachse, die dazu in der Regel mit entsprechend großen Vorderrädern ausgestattet sind. Die Hinterräder sind durch die Anordnung der Anbaugruppen weniger stark belastet.

Neben der ungünstigen Masseverteilung ist die Lenkung der Hinterräder die wichtigste Ursache für Lenkinstabilitäten. Da die Wirkung eines Lenkeinschlages an den Hinterrädern für den Fahrzeuglenker erst später sichtbar wird als bei einer Vorderradlenkung, besteht in der Regel die Tendenz zu einem zu großen Einschlag der Lenkräder. Bei langsamer Fahrt hat dies keine negativen Auswirkungen, da unter anderem ausreichend Zeit für eine Lenkkorrektur zur Verfügung steht. Bei schnelleren Fahrten wird das Lenkverhalten jedoch instabil.

Die Aufgabe der vorliegenden Erfindung ist es, ein Verfahren zum Lenken und Antreiben einer selbstfahrenden Arbeitsmaschine sowie einer selbstfahrende Arbeitsmaschine bereitzustellen, durch die auch bei höheren Fahrgeschwindigkeiten ein stabiles Lenkverhalten ermöglicht wird.

Die Aufgabe wird erfindungsgemäß durch ein Verfahren zum Lenken und Antreiben einer selbstfahrenden Arbeitsmaschine, insbesondere einer Landmaschine, mit stets um eine gemeinsame Drehachse antreibbaren Vorderrädern und lenkbaren Hinterrädern, bei dem
- bei einem Lenkeinschlag eines Lenkrades der Arbeitsmaschine die Vorderräder mit unterschiedlichen Drehzahlen angetrieben werden, wobei die Drehzahldifferenz zwischen den Drehzahlen der Vorderräder in Abhängigkeit der Größe und der Richtung des Lenkeinschlages gesteuert wird,
dadurch gekennzeichnet, daß
- in einem ersten Fahrgeschwindigkeitsbereich der Arbeitsmaschine die Hinterräder abhängig vom Lenkeinschlag des Lenkrades auf einen vorgegebenen Lenkwinkel relativ zu einer Mittenachse der Arbeitsmaschine gelenkt werden, so daß der theoretische Momentanpol der Vorderräder und der theoretische Momentanpol der Hinterräder übereinstimmen,
- in einem zweiten Fahrgeschwindigkeitsbereich der Arbeitsmaschine, der über dem ersten Fahrgeschwindigkeitsbereich liegt, die Hinterräder bei einem Lenkeinschlag des Lenkrads diesem allmählich nachgelenkt werden,
- in einem dritten Fahrgeschwindigkeitsbereich der Arbeitsmaschine, der über dem zweiten Fahrgeschwindigkeitsbereich liegt, die Hinterräder ungelenkt auf Geradeausfahrt eingestellt werden
gelöst.

Im ersten Fahrgeschwindigkeitsbereich der Arbeitsmaschine werden die Hinterräder somit entsprechend dem Lenkeinschlag am Lenkrad gelenkt. Da der erste Fahrgeschwindigkeitsbereich geringe Geschwindigkeiten umfaßt, ist das Lenkverhalten bei einer Kombination von mit einer Drehzahldifferenz angetriebenen Vorderrädern und gelenkten Hinterrädern stabil. Im zweiten Fahrgeschwindigkeitsbereich, der höhere Geschwindigkeiten umfaßt als der erste Fahrgeschwindigkeitsbereich, werden die Hinterräder dem Lenkeinschlag des Lenkrades allmählich nachgelenkt. Die Hinterräder werden somit bei einem schnell vorgenommen Lenkeinschlag des Lenkrades langsam nachgelenkt, bis der zu erreichende Lenkwinkel erreicht ist. Bis dieser erreicht ist, sind die Hinterräder somit untersteuert. Im dritten Fahrgeschwindigkeitsbereich, der über den beiden Fahrgeschwindigkeitsbereichen liegt, werden die Hinterräder nicht mehr gelenkt und verbleiben in einer Stellung für Geradeausfahrt. Das Fahrzeug wird somit lediglich über die Drehzahldifferenz der Vorderräder gelenkt. Somit werden bei hohen Geschwindigkeiten jegliche negativen Auswirkungen einer Hinterradlenkung eliminiert.

Vorzugsweise ist vorgesehen, daß im zweiten Fahrgeschwindigkeitsbereich die Geschwindigkeit, mit der die Hinterräder dem Lenkeinschlag allmählich nachgelenkt werden, abhängig von der Fahrgeschwindigkeit der Arbeitsmaschine ausgehend vom Übergang zwischen erstem und zweitem Fahrgeschwindigkeitsbereich zum Übergang zwischen zweitem und drittem Fahrgeschwindigkeitsbereich stetig abnimmt.

Somit wird ein fließender Übergang zwischen dem ersten und dem zweiten sowie zwischen dem zweiten und dem dritten Fahrgeschwindigkeitsbereich gewährleistet und ein abruptes Einschalten des allmählichen Nachlenkens der Hinterräder vermieden.

Zudem können im zweiten Fahrgeschwindigkeitsbereich die Hinterräder auf einen geringeren Lenkwinkel nachgelenkt werden, als durch den Lenkeinschlag des Lenkrades vorgegeben wird. Hierdurch werden die Hinterräder nicht nur während des allmählichen nachlenkens untersteuert, sondern innerhalb des gesamten zweiten Fahrgeschwindigkeitsbereiches.

Um auch hierbei abrupte Übergänge zu vermeiden, kann vorgesehen sein, daß im zweiten Fahrgeschwindigkeitsbereich die Differenz zwischen dem Lenkwinkel, auf den nachgelenkt wird, und dem vom Lenkrad vorgegebenen Lenkwinkel abhängig von der Fahrgeschwindigkeit der Arbeitsmaschine ausgehend vom Übergang zwischen dem ersten und dem zweiten Fahrgeschwindigkeitsbereich zum Übergang zwischen dem zweiten und dem dritten Fahrgeschwindigkeitsbereich stetig zunimmt.

In einem weiteren vierten Fahrgeschwindigkeitsbereich der Arbeitsmaschine, der unterhalb des ersten Fahrgeschwindigkeitsbereiches liegt, kann vorgesehen sein, daß die Drehzahldifferenzen an den Vorderrädern höher ist als für ein Aufeinanderliegen der theoretischen Momentanpole der Vorderräder und der Hinterräder erforderlich ist. Hierdurch sollen Wendemanöver bei geringen Geschwindigkeiten erleichtert werden, insbesondere dann, wenn die Hinterräder einen begrenzten maximalen Lenkwinkel aufweisen. Die Hinterräder sind in diesem Fall untersteuert.

Zusätzlich kann vorgesehen sein, daß in Abhängigkeit der Größe des Lenkeinschlages und in Abhängigkeit der Fahrgeschwindigkeit, die Fahrgeschwindigkeit reduziert wird.

Der erste Fahrgeschwindigkeitsbereich umfaßt vorzugsweise Geschwindigkeiten bis ca. 15 km/h bis 20 km/h. Der zweite Fahrgeschwindigkeitsbereich umfaßt vorzugsweise Geschwindigkeiten bis maximal 20 km/h bis 30 km/h.

Ferner wird die Aufgabe durch eine selbstfahrende Arbeitsmaschine, insbesondere Landmaschine, mit
- ungelenkten antreibbaren Vorderrädern,
- lenkbaren Hinterrädern,
- einem Antriebsmotor,
- einem Antriebsstrang, der die Vorderräder antriebsmäßig mit dem Antriebsmotor verbindet, und
- einer Steuerungseinheit, dadurch gekennzeichnet, daß durch die Steuerungseinheit die Lenkung der Hinterräder und der Antrieb der Vorderräder gemäß einem Verfahren nach den Ansprüchen 1 bis 5 steuerbar sind,
gelöst.

Hierbei kann der Antriebsstrang eine vom Antriebsmotor angetriebene Hydraulikpumpe umfassen, wobei die Vorderräder jeweils von einem Hydraulikmotor angetrieben sind und die Hydraulikmotoren von der Hydraulikpumpe versorgt sind.

Zur Regulierung der Drehzahldifferenz an den Vorderrädern ist der Zufluß von Hydraulikflüssigkeit zum Versorgen der Hydraulikmotoren durch die Steuereinheit steuerbar. Ebenso kann vorgesehen sein, daß den Vorderrädern jeweils Bremsmittel zugeordnet sind, mittels derer das jeweilige Vorderrad von der Steuereinheit gesteuert abbremsbar ist. Eine weitere Möglichkeit zur Regulierung der Drehzahldifferenz an den Vorderrädern ist, daß die Hydraulikmotoren Verstellmotoren sind, die von der Steuereinheit verstellbar sind.

In alternativer Gestaltung umfaßt der Antriebsstrang zwei vom Antriebsmotor angetriebene Hydraulikpumpen, wobei die Vorderräder jeweils von einem Hydraulikmotor angetrieben sind und die Hydraulikmotoren jeweils von einer der Hydraulikpumpen versorgt sind.

Hierbei können die Leistungen der Hydraulikpumpen von der Steuereinheit steuerbar sein.

In einer weiteren Ausgestaltung der Arbeitsmaschine ist vorgesehen, daß der Antriebsstrang mechanische Kraftübertragungsmittel umfaßt. Diese können ein Getriebe, welches antriebsmäßig mit dem Antriebsmotor verbunden ist sowie Seitenwellen, welche jeweils einerseits antriebsmäßig mit dem Ausgleichsgetriebe und andererseits mit einem Vorderrad verbunden sind, umfassen.

Zumindest einem Vorderrad kann ein Überlagerungsgetriebe zugeordnet sein, mittels dem die Drehzahl eines weiteren Motors, der von der Steuereinheit steuerbar ist, der Drehzahl der mit dem Antriebsmotor verbundenen Getriebeteile des Überlagerungsgetriebes des jeweiligen Vorderrades überlagerbar ist.

Im Kraftfluß vom Getriebe zu den Vorderrädern können Bremsmittel angeordnet sein, mittels derer das jeweilige Vorderrad abbremsbar ist.

Hierbei können die Bremsmittel durch eine Differentialsperre dargestellt sein.

Bevorzugte Ausführungsbeispiele werden anhand der Zeichnungen beschrieben.

Es zeigt
- Figur 1: eine Landmaschine mit jeweils von einem Hydraulikmotor angetriebenen Vorderräder, wobei die Hydraulikmotoren von einer gemeinsamen Hydraulikpumpe versorgt werden, und mit einem Stromteiler,
- Figur 2: eine Landmaschine mit jeweils von einem Hydraulikmotor angetriebenen Vorderrädern, wobei die Hydraulikmotoren von einer gemeinsamen Hydraulikpumpe versorgt werden, und mit den Vorderrädern zugeordneten Bremsmitteln,
- Figur 3: eine Landmaschine mit jeweils von einem Hydraulikmotor angetriebenen Vorderrädern, wobei die Hydraulikmotoren von einer gemeinsamen Hydraulikpumpe versorgt werden und die Hydraulikmotoren als Verstellmotoren ausgebildet sind,
- Figur 4: eine Landmaschine mit jeweils von einem Hydraulikmotor angetriebenen Vorderrädern, wobei die Hydraulikmotoren jeweils von einer separaten Hydraulikpumpe versorgt werden,
- Figur 5: eine Landmaschine mit einem Antriebsstrang, der mechanische Kraftübertragungsmittel umfaßt, wobei den Vorderrädern jeweils Bremsmittel zugeordnet sind,
- Figur 6: eine Landmaschine mit einem Antriebsstrang, der mechanische Kraftübertragungsmittel umfaßt, wobei einem Vorderrad ein Überlagerungsgetriebe zugeordnet ist, und
- Figur 7: eine Landmaschine mit einem Antriebsstrang, der mechanische Kraftübertragungsmittel mit einem Ausgleichsgetriebe und einer Differenzialsperre umfaßt.

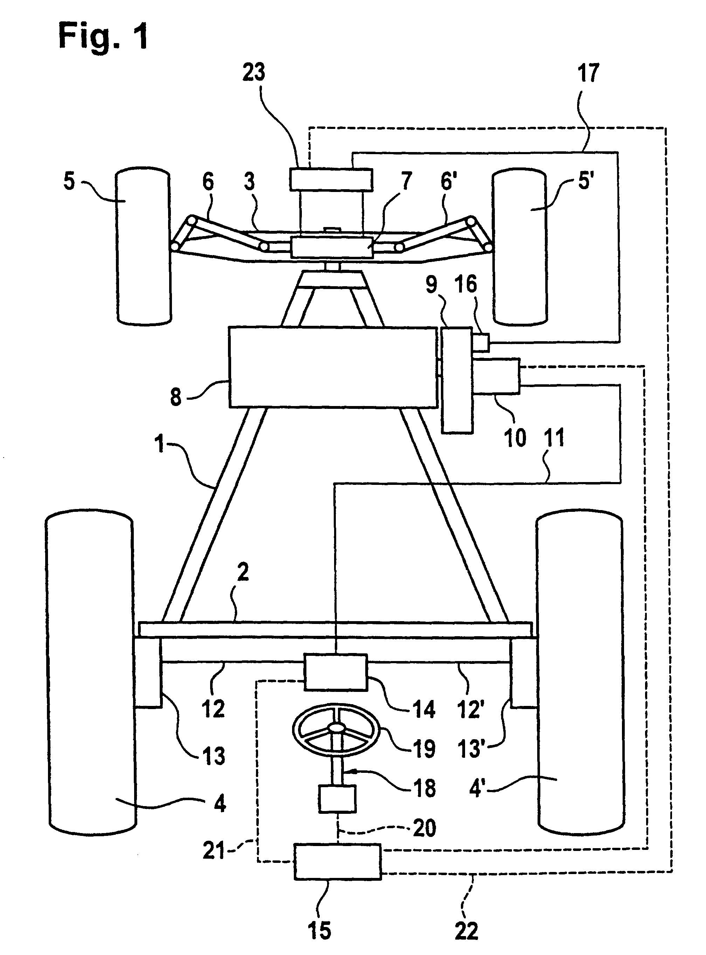

Figur 1 zeigt schematisch eine Landmaschine mit einem Rahmen 1, mit einer Vorderachse 2 und einer Hinterachse 3. Die Vorderachse 2 trägt Vorderräder 4, 4' und die Hinterachse 3 trägt Hinterräder 5, 5'. Die Vorderräder 4, 4' sind nicht lenkbar; die Hinterräder 5, 5' sind mittels eines Lenkgestänges 6, 6', das von einem Stellzylinder 7 betätigbar ist, lenkbar an der Hinterachse 3 angeordnet.

Die Landmaschine umfaßt ferner einen Antriebsmotor 8, bei dem es sich z. B. um einen Verbrennungsmotor handeln kann. Dieser ist mit einem Hauptgetriebe 9 antriebsmäßig verbunden. Über das Hauptgetriebe 9 wird eine Hydraulikpumpe 10 angetrieben. Die Hydraulikpumpe 10 ist über Hydraulikleitungen 11, 12, 12' mit Hydraulikmotoren 13, 13', die jeweils ein Vorderrad 4, 4' antreiben, verbunden. Der Förderstrom in der Hydraulikleitung 11 wird durch einen Stromteiler 14 auf die Hydraulikleitung 12, 12' verteilt. Der Stromteiler 14 wird von einer Steuereinheit 15 gesteuert.

Das Hauptgetriebe 9 ist zudem mit einer weiteren Hydraulikpumpe 16 antriebsmäßig verbunden, die über eine Hydraulikleitung 17 den Stellzylinder 7 versorgt.

An einer Lenksäule 18 kann der Lenkeinschlag eines Lenkrades 19 z. B. elektronisch erfaßt werden, wobei die elektronischen Signale über eine Signalleitung 20 an die Steuereinheit 15 übermittelt werden. In Abhängigkeit des Signals kann nun einerseits über eine Signalleitung 21 der Stromteiler 14 gesteuert werden und andererseits über eine Signalleitung 22 eine Steuerventileinheit 23 zur Betätigung des Stellzylinders 7 gesteuert werden. Somit wird über die Steuereinheit 15 in Abhängigkeit von der Größe und der Richtung des Lenkeinschlages der Zufluß an Hydraulikflüssigkeit von der Hydraulikpumpe 10 zu den Hydraulikmotoren 13, 13' sowie der Einschlag der Hinterräder 5, 5' gesteuert.

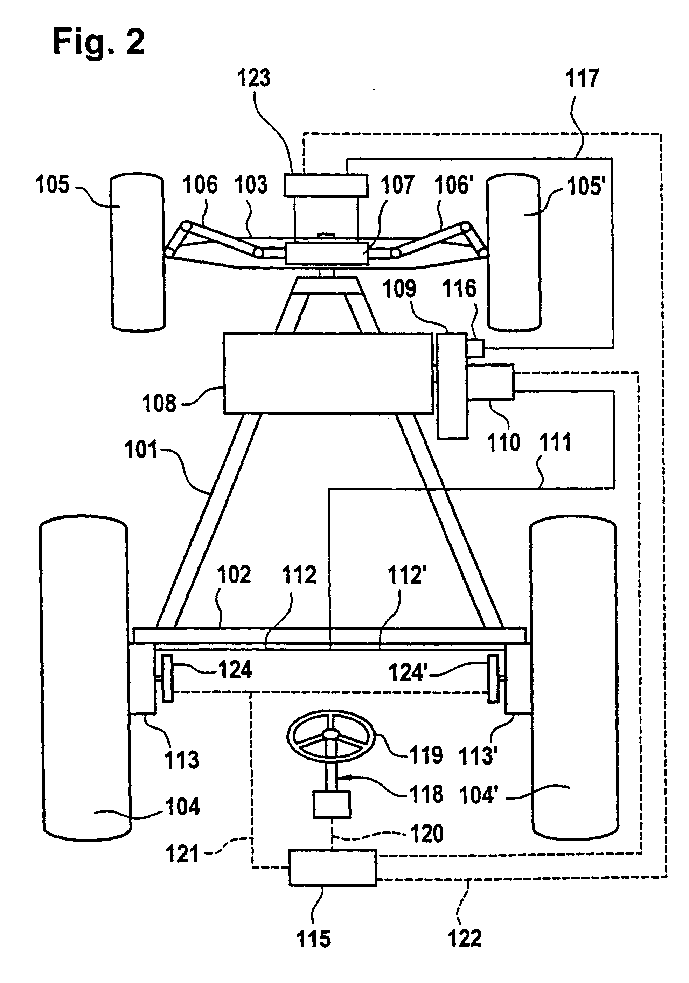

Figur 2 zeigt ein alternatives Antriebskonzept. Bauteile, die mit Bauteilen der Landmaschine gemäß Figur 1 übereinstimmen, sind mit Bezugszeichen versehen, die um den Wert 100 erhöht sind und bei Figur 1 beschrieben.

Im Gegensatz zu der Landmaschine gemäß Figur 1 ist zwischen den Hydraulikleitungen 111, 112, 112' kein Stromteiler vorgesehen. Jedem Vorderrad 104, 104' ist jeweils eine Bremse 124, 124' zugeordnet. Die Bremsen 124, 124' werden über die Signalleitung 121 von der Steuereinheit 115 in Abhängigkeit der Größe und der Richtung des Lenkeinschlages des Lenkrades 119 gesteuert.

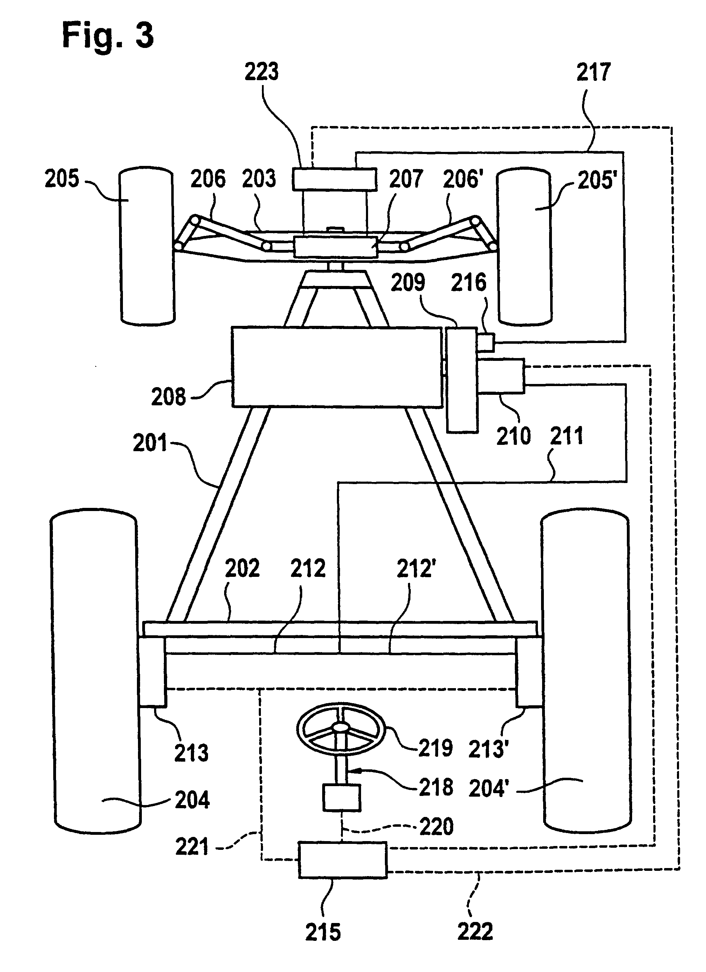

Figur 3 zeigt ein weiteres Antriebskonzept. Bauteile, die mit Bauteilen der Landmaschine gemäß Figur 1 übereinstimmen, sind mit Bezugszeichen versehen, die um den Wert 200 erhöht sind und bei Figur 1 beschrieben.

In diesem Ausführungsbeispiel ist zwischen den Hydraulikleitungen 211, 212, 212' kein Stromteiler vorgesehen. Vielmehr ist die Steuereinheit 215 über die Signalleitung 221 mit den Hydraulikmotoren 213, 213' verbunden. Die Hydraulikmotoren 213, 213' sind als Verstellmotoren ausgeführt, deren Leistung von der Steuereinheit 215 steuerbar ist.

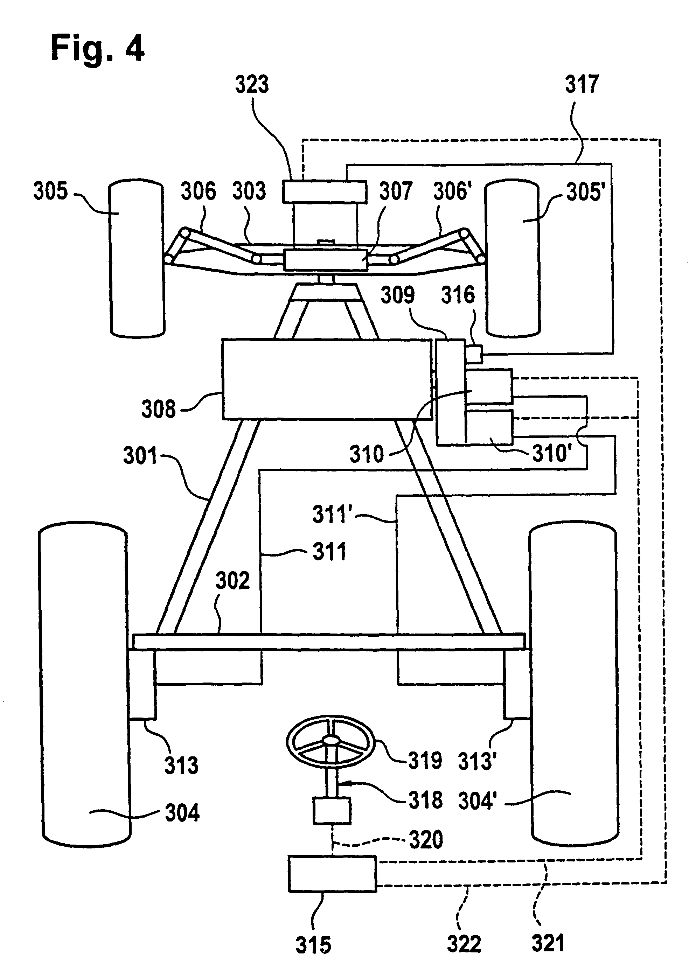

Figur 4 zeigt ein Antriebskonzept mit zwei Hydraulikpumpen 310, 310'. Bauteile, die mit Bauteilen der Landmaschine gemäß Figur 1 übereinstimmen, sind mit Bezugszeichen versehen, die um den Wert 300 erhöht sind und bei Figur 1 beschrieben.

Das Hauptgetriebe 309 ist antriebsmäßig mit den beiden Hydraulikpumpen 310, 310' verbunden. Diese speisen jeweils separat einen Hydraulikmotor 313, 313' über Hydraulikleitungen 311, 311'. Die Steuereinheit 315 ist über Signalleitung 321, 321' mit den Hydraulikpumpen 310, 310' verbunden, welche als Verstellpumpen ausgestaltet sind und somit von der Steuereinheit 315 steuerbar sind.

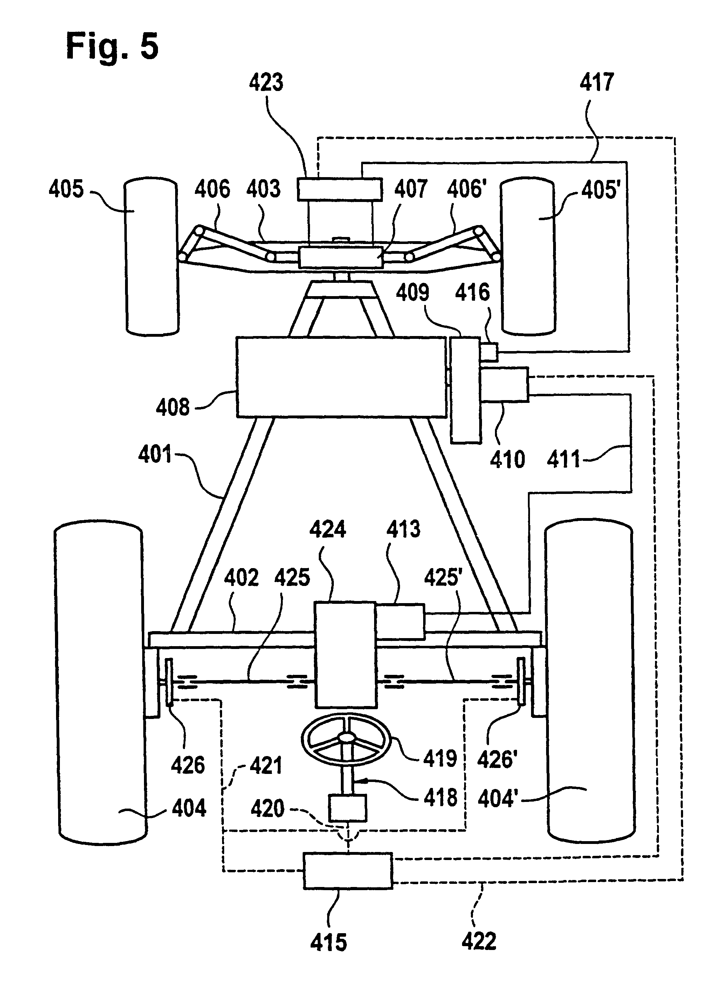

Figur 5 zeigt eine Landmaschine mit einem Antriebsstrang, der mechanische Übertragungsmittel umfaßt. Bauteile, die mit Bauteilen der Figur 1 übereinstimmen, sind mit Bezugszeichen versehen, die um den Wert 400 erhöht sind und bei Figur 1 beschrieben.

Die Hydraulikpumpe 410 ist über eine Hydraulikleitung 411 leitungsmäßig mit einem Hydraulikmotor 413 verbunden. Der Hydraulikmotor 413 ist antriebsmäßig mit einem Getriebe 424 verbunden, welches ausgangsseitig mit Seitenwellen 425, 425' verbunden ist. Über die Seitenwellen 425, 425' ist jeweils ein Vorderrad 404, 404' angetrieben. Den Vorderrädern 404, 404' sind Bremsen 426, 426' zugeordnet. Die Bremsen 426, 426' sind über die Signalleitung 421 mit der Steuereinheit 415 verbunden und somit von diesem steuerbar.

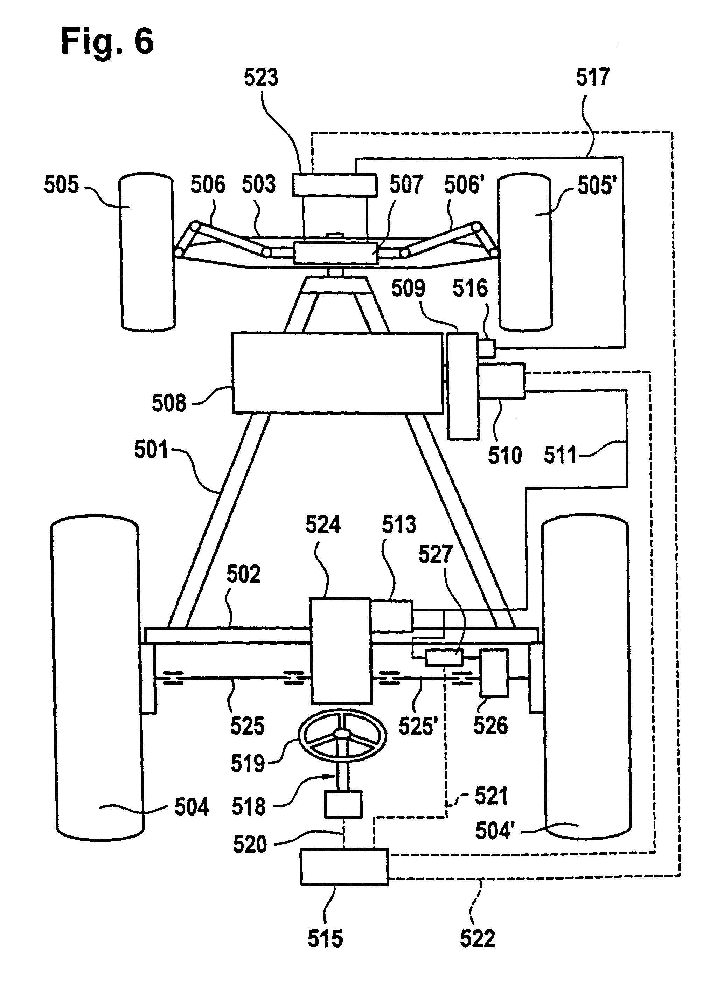

Figur 6 zeigt eine weiteres Ausführungsbeispiel einer Landmaschine mit einem Antriebsstrang, welcher mechanische Kraftübertragungsmittel umfaßt. Bauteile, die mit Bauteilen der Figur 1 übereinstimmen, sind mit Bezugszeichen versehen, die um den Wert 500 erhöht sind und bei Figur 1 beschrieben.

Die Hydraulikpumpe 510 ist leitungsmäßig mit einem Hydraulikmotor 513 über eine Hydraulikleitung 511 verbunden. Der Hydraulikmotor 513 ist antriebsmäßig mit einem Getriebe 524 verbunden, über welches Seitenwellen 525, 525' angetrieben werden. Die Seitenwellen 525, 525' sind antriebsmäßig mit den Vorderrädern 504, 504' verbunden, wobei zwischen der Seitenwelle 525' und dem Vorderrad 504' ein Überlagerungsgetriebe 526 angeordnet ist. Das Überlagerungsgetriebe 526 ist ferner antriebsmäßig mit einem weiteren Hydraulikmotor 527 verbunden, welcher ebenfalls von der Hydraulikpumpe 510 versorgt ist. Der Hydraulikmotor 527 ist von der Steuereinheit 515, welche über die Signalleitung 521 mit dem Hydraulikmotor 527 verbunden ist, steuerbar. Die Drehzahl des Hydraulikmotors 527 läßt sich mittels der Steuereinheit 515 steuern und der Drehzahl der Seitenwelle 525' überlagern. Somit läßt sich eine dem Lenkeinschlag des Lenkrades 519 entsprechende Drehzahldifferenz zwischen den Vorderrädern 504 und 504' erreichen.

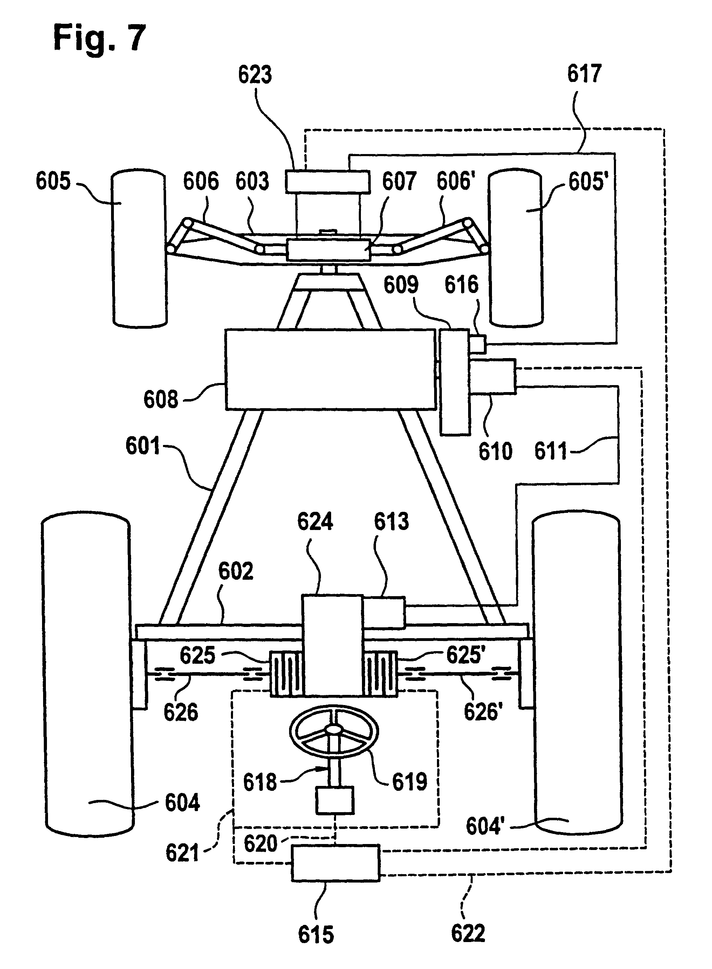

Figur 7 zeigt eine weiteres Ausführungsbeispiel einer Landmaschine mit einem Antriebsstrang, welcher mechanische Kraftübertragungsmittel umfaßt. Bauteile, die mit Bauteilen der Figur 1 übereinstimmen, sind mit Bezugszeichen versehen, die um den Wert 600 erhöht sind und bei Figur 1 beschrieben.

Die Hydraulikpumpe 610 ist leitungsmäßig mit einem Hydraulikmotor 613 über eine Hydraulikleitung 611 verbunden, wobei der Hydraulikmotor 613 mit einem Getriebe 624 antriebsmäßig verbunden ist. Das Getriebe 624 umfaßt ein Differentialgetriebe mit Differentialsperren 625, 625'. Diese sind mit Seitenwellen 626, 626' antriebsmäßig verbunden, welche die Vorderrädern 604, 604' antreiben. Die Differentialsperren 625, 625' sind über die Signalleitung 611 mit der Steuereinheit 615 verbunden und somit von diesem betätigbar.

### Bezugszeichenliste

- 1: Rahmen
- 2: Vorderachse
- 3: Hinterachse
- 4, 4': Vorderrad
- 5, 5': Hinterrad
- 6, 6': Lenkgestänge
- 7: Stellzylinder
- 8: Antriebsmotor
- 9: Hauptgetriebe
- 10: Hydraulikpumpe
- 11: Hydraulikleitung
- 12, 12': Hydraulikleitung
- 13, 13': Hydraulikmotoren
- 14: Stromteiler
- 15: Steuereinheit
- 16: Hydraulikpumpe
- 17: Hydraulikleitung
- 18: Lenksäule
- 19: Lenkrad
- 20: Signalleitung
- 21: Signalleitung
- 22: Signalleitung
- 23: Steuerventileinheit
- 101: Rahmen
- 102: Vorderachse
- 103: Hinterachse
- 104, 104': Vorderrad
- 105, 105': Hinterrad
- 106, 106': Lenkgestänge
- 107: Stellzylinder
- 108: Antriebsmotor
- 109: Hauptgetriebe
- 110: Hydraulikpumpe
- 111: Hydraulikleitung
- 112, 112': Hydraulikleitung
- 113, 113': Hydraulikmotoren
- 115: Steuereinheit
- 116: Hydraulikpumpe
- 117: Hydraulikleitung
- 118: Lenksäule
- 119: Lenkrad
- 120: Signalleitung
- 121: Signalleitung
- 122: Signalleitung
- 123: Steuerventileinheit
- 124, 124': Bremse
- 201: Rahmen
- 202: Vorderachse
- 203: Hinterachse
- 204, 204': Vorderrad
- 205, 205': Hinterrad
- 206, 206': Lenkgestänge
- 207: Stellzylinder
- 208: Antriebsmotor
- 209: Hauptgetriebe
- 210: Hydraulikpumpe
- 211: Hydraulikleitung
- 212, 212': Hydraulikleitung
- 213, 213': Hydraulikmotoren
- 215: Steuereinheit
- 216: Hydraulikpumpe
- 217: Hydraulikleitung
- 218: Lenksäule
- 219: Lenkrad
- 220: Signalleitung
- 221: Signalleitung
- 222: Signalleitung
- 223: Steuerventileinheit
- 301: Rahmen
- 302: Vorderachse
- 303: Hinterachse
- 304, 304': Vorderrad
- 305, 305': Hinterrad
- 306, 306': Lenkgestänge
- 307: Stellzylinder
- 308: Antriebsmotor
- 309: Hauptgetriebe
- 310, 310': Hydraulikpumpe
- 311, 311': Hydraulikleitung
- 313, 313': Hydraulikmotoren
- 315: Steuereinheit
- 316: Hydraulikpumpe
- 317: Hydraulikleitung
- 318: Lenksäule
- 319: Lenkrad
- 320: Signalleitung
- 321, 321': Signalleitung
- 322: Signalleitung
- 323: Steuerventileinheit
- 401: Rahmen
- 402: Vorderachse
- 403: Hinterachse
- 404, 404': Vorderrad
- 405, 405': Hinterrad
- 406, 406': Lenkgestänge
- 407: Stellzylinder
- 408: Antriebsmotor
- 409: Hauptgetriebe
- 410: Hydraulikpumpe
- 411: Hydraulikleitung
- 413: Hydraulikmotor
- 415: Steuereinheit
- 416: Hydraulikpumpe
- 417: Hydraulikleitung
- 418: Lenksäule
- 419: Lenkrad
- 420: Signalleitung
- 421: Signalleitung
- 422: Signalleitung
- 423: Steuerventileinheit
- 424: Getriebe
- 425, 425': Seitenwelle
- 426, 426': Bremse
- 501: Rahmen
- 502: Vorderachse
- 503: Hinterachse
- 504, 504': Vorderrad
- 505, 505': Hinterrad
- 506, 506': Lenkgestänge
- 507: Stellzylinder
- 508: Antriebsmotor
- 509: Hauptgetriebe
- 510: Hydraulikpumpe
- 511: Hydraulikleitung
- 513: Hydraulikmotor
- 515: Steuereinheit
- 516: Hydraulikpumpe
- 517: Hydraulikleitung
- 518: Lenksäule
- 519: Lenkrad
- 520: Signalleitung
- 521: Signalleitung
- 522: Signalleitung
- 523: Steuerventileinheit
- 524: Getriebe
- 525, 525': Seitenwelle
- 526: Überlagerungsgetriebe
- 527: Hydraulikmotor
- 601: Rahmen
- 602: Vorderachse
- 603: Hinterachse
- 604, 604': Vorderrad
- 605, 605': Hinterrad
- 606, 606': Lenkgestänge
- 607: Stellzylinder
- 608: Antriebsmotor
- 609: Hauptgetriebe
- 610: Hydraulikpumpe
- 611: Hydraulikleitung
- 613: Hydraulikmotor
- 615: Steuereinheit
- 616: Hydraulikpumpe
- 617: Hydraulikleitung
- 618: Lenksäule
- 619: Lenkrad
- 620: Signalleitung
- 621: Signalleitung
- 622: Signalleitung
- 623: Steuerventileinheit
- 624: Getriebe
- 625, 625': Differentialsperre
- 626, 626': Seitenwelle

## Patentansprüche

1. Verfahren zum Lenken und Antreiben einer selbstfahrenden Arbeitsmaschine, insbesondere einer Landmaschine, mit stets, um eine gemeinsame Drehachse antreibbaren Vorderrädern (4, 4') und lenkbaren Hinterrädern (5, 5'), bei dem
- bei einem Lenkeinschlag eines Lenkrades (19) der Arbeitsmaschine die Vorderräder (4, 4') mit unterschiedlichen Drehzahlen angetrieben werden, wobei die Drehzahldifferenz zwischen den Drehzahlen der Vorderräder (4, 4') in Abhängigkeit der Größe und der Richtung des Lenkeinschlages gesteuert wird, **dadurch gekennzeichnet, daß**
- in einem ersten Fahrgeschwindigkeitsbereich der Arbeitsmaschine die Hinterräder (5, 5') abhängig vom Lenkeinschlag des Lenkrades (19) auf einen vorgegebenen Lenkwinkel relativ zu einer Mittenachse der Arbeitsmaschine gelenkt werden, so daß der theoretische Momentanpol der Vorderräder (4, 4') und der theoretische Momentanpol der Hinterräder (5, 5') übereinstimmen,
- in einem zweiten Fahrgeschwindigkeitsbereich der Arbeitsmaschine, der über dem ersten Fahrgeschwindigkeitsbereich liegt, die Hinterräder (5, 5') bei einem Lenkeinschlag des Lenkrads (19) diesem allmählich nachgelenkt werden,
- in einem dritten Fahrgeschwindigkeitsbereich der Arbeitsmaschine, der über dem zweiten Fahrgeschwindigkeitsbereich liegt, die Hinterräder (5, 5') ungelenkt auf Geradeausfahrt eingestellt werden.

2. Verfahren nach Anspruch 1,
**dadurch gekennzeichnet,**
**daß** im zweiten Fahrgeschwindigkeitsbereich die Geschwindigkeit, mit der die Hinterräder (5, 5') dem Lenkeinschlag allmählich nachgelenkt werden, abhängig von der Fahrgeschwindigkeit der Arbeitsmaschine ausgehend vom Übergang zwischen erstem und zweitem Fahrgeschwindigkeitsbereich zum Übergang zwischen zweitem und drittem Fahrgeschwindigkeitsbereich stetig abnimmt.

3. Verfahren nach einem der Ansprüche 1 oder 2,
**dadurch gekennzeichnet,**
**daß** im zweiten Fahrgeschwindigkeitsbereich die Hinterräder (5, 5') auf einen geringeren Lenkwinkel nachgelenkt werden als durch den Lenkeinschlag des Lenkrads (19) vorgegeben wird.

4. Verfahren nach Anspruch 3,
**dadurch gekennzeichnet,**
**daß** im zweiten Fahrgeschwindigkeitsbereich die Differenz zwischen dem Lenkwinkel, auf den nachgelenkt wird, und dem vom Lenkrad vorgegebenen Lenkwinkel abhängig von der Fahrgeschwindigkeit der Arbeitsmaschine ausgehend vom Übergang zwischen erstem und zweitem Fahrgeschwindigkeitsbereich zum Übergang zwischen zweitem und drittem Fahrgeschwindigkeitsbereich stetig zunimmt.

5. Verfahren nach einem der Ansprüche 1 bis 4,
**dadurch gekennzeichnet,**
**daß** in einem vierten Fahrgeschwindigkeitsbereich der Arbeitsmaschine, der unterhalb des ersten Fahrgeschwindigkeitsbereich liegt, die Drehzahldifferenz an den Vorderrädern höher ist als für ein Aufeinenderliegen der theoretischen Momentanpole der Vorderräder und der Hinterräder erforderlich ist.

6. Verfahren nach einem der Ansprüche 1 bis 5,
**dadurch gekennzeichnet,**
**daß** in Abhängigkeit der Größe des Lenkeinschlags und in Abhängigkeit der Fahrgeschwindigkeit die Fahrgeschwindigkeit reduziert wird.

7. Selbstfahrende Arbeitsmaschine, insbesondere Landmaschine, mit
- ungelenkten antreibbaren Vorderrädern (4, 4', 104, 104', 204, 204', 304, 304', 404, 404', 504, 504', 604, 604'),
- lenkbaren Hinterrädern (5, 5', 105, 105', 205, 205', 305, 305', 405, 405', 505, 505', 605, 605'),
- einem Antriebsmotor (8, 108, 208, 308, 408, 508, 608),
- einem Antriebsstrang, der die Vorderräder (4, 4', 104, 104', 204, 204', 304, 304', 404, 404', 504, 504', 604, 604') antriebsmäßig mit dem Antriebsmotor (8, 108, 208, 308, 408, 508, 608) verbindet, und
- einer Steuerungseinheit (15, 115, 215, 315, 415, 515, 615), **dadurch gekennzeichnet, daß** durch die Steuerungseinheit die Lenkung der Hinterräder (5, 5', 105, 105', 205, 205', 305, 305', 405, 405', 505, 505', 605, 605') und der Antrieb der Vorderräder (4, 4', 104, 104', 204, 204', 304, 304', 404, 404', 504, 504', 604, 604') gemäß einem Verfahren nach den Ansprüchen 1 bis 5 steuerbar sind.

8. Arbeitsmaschine nach Anspruch 7,
**dadurch gekennzeichnet,**
**daß** der Antriebsstrang eine vom Antriebsmotor (8) angetriebene Hydraulikpumpe (10) umfaßt,
**daß** die Vorderräder (4, 4') jeweils von einem Hydraulikmotor (13, 13') angetrieben sind, wobei die Hydraulikmotoren (13, 13') von der Hydraulikpumpe (10) versorgt sind.

9. Arbeitsmaschine nach Anspruch 8,
**dadurch gekennzeichnet,**
**daß** der Zufluß von Hydraulikflüssigkeit zum Versorgen der Hydraulikmotoren (13, 13') durch die Steuereinheit (15) steuerbar ist.

10. Arbeitsmaschine nach Anspruch 8,
**dadurch gekennzeichnet,**
**daß** den Vorderrädern (104, 104') jeweils Bremsmittel (124, 124') zugeordnet sind, mittels derer das jeweilige Vorderrad (104, 104') von der Steuereinheit (115) gesteuert abbremsbar ist.

11. Arbeitsmaschine nach Anspruch 8,
**dadurch gekennzeichnet,**
**daß** die Hydraulikmotoren (213, 213') Verstellmotoren sind, die von der Steuereinheit (215) verstellbar sind.

12. Arbeitsmaschine nach Anspruch 7,
**dadurch gekennzeichnet,**
**daß** der Antriebsstrang zwei vom Antriebsmotor (308) angetriebene Hydraulikpumpen (310, 310') umfaßt,
**daß** die Vorderräder (304, 304') jeweils von einem Hydraulikmotor (313, 313') angetrieben sind, wobei die Hydraulikmotoren (313, 313') jeweils von einer der Hydraulikpumpen (310, 310') versorgt sind.

13. Arbeitsmaschine nach Anspruch 12,
**dadurch gekennzeichnet,**
**daß** die Leistungen der Hydraulikpumpen (313, 313') von der Steuereinheit (315) steuerbar sind.

14. Arbeitsmaschine nach Anspruch 7,
**dadurch gekennzeichnet,**
**daß** der Antriebsstrang mechanische Kraftübertragungsmittel umfaßt.

15. Arbeitsmaschine nach Anspruch 14,
**dadurch gekennzeichnet,**
**daß** die mechanischen Kraftübertragungsmittel
- ein Getriebe (424) umfassen, welches antriebsmäßig mit dem Antriebsmotor (408) verbunden ist, und
- Seitenwellen (425, 425') umfassen, welche jeweils einerseits antriebsmäßig mit dem Getriebe (424) und andererseits mit einem Vorderrad (404, 404') verbunden sind.

16. Arbeitsmaschine nach einem der Ansprüche 14 und 15,
**dadurch gekennzeichnet,**
**daß** zumindest einem Vorderrad (504') ein Überlagerungsgetriebe (526) zugeordnet ist, mittels dem die Drehzahl eines weiteren Motors (527), der von der Steuereinheit (515) steuerbar ist, der Drehzahl des jeweiligen Vorderrades (504') überlagerbar ist.

17. Arbeitsmaschine nach Anspruch 15,
**dadurch gekennzeichnet,**
**daß** jeweils im Kraftfluß vom Getriebe (624) zu den Vorderrädern (604, 604') Bremsmittel angeordnet sind, mittels derer das jeweilige Vorderrad (604, 604') abbremsbar ist.

18. Arbeitsmaschine nach Anspruch 18,
**dadurch gekennzeichnet,**
**daß** die Bremsmittel durch eine Differentialsperre (625, 625') dargestellt sind.

## Revendications

1. Procédé pour diriger et entraîner une machine de travail autotractée, notamment une machine agricole, comportant des roues avant (4, 4') pouvant être entraînées de façon permanente autour d'un axe de rotation commun, et des roues arrière orientables (5, 5'), selon lequel
- lors d'un braquage d'un volant (19) de la machine de travail, les roues avant (4, 4') sont entraînées avec des vitesses de rotation différentes, la différence entre les vitesses de rotation des roues avant (4, 4') étant commandée en fonction de l'amplitude et de la direction du braquage, **caractérisé en ce que**
- dans une première gamme de vitesses de déplacement de la machine de travail, les roues arrière (5, 5') sont orientées en fonction du braquage du volant (19), sur un angle de braquage prédéterminé par rapport à l'axe central de la machine de travail, de sorte que le centre instantané de rotation des roues avant (4, 4') et le centre instantané de rotation théorique des roues arrière (5, 5') coïncident,
- dans une seconde gamme de vitesses de déplacement de la machine de travail, qui est située au-dessus de la première gamme de vitesses de déplacement, lors d'un braquage du volant (19) les roues arrière (5, 5') sont braquées progressivement d'une manière retardée par rapport à ce braquage,
- dans une troisième gamme de vitesses de déplacement de la machine de travail, qui se situe au-dessus de la seconde gamme de vitesses de déplacement, les roues arrière (5, 5') sont réglées, sans aucun braquage, sur un déplacement en ligne droite.

2. Procédé selon la revendication 1, **caractérisé en ce que** dans la seconde gamme de vitesses de déplacement, la vitesse, avec laquelle les roues arrière (5, 5') sont braquées progressivement d'une manière retardée par rapport au braquage, diminue en fonction de la vitesse de déplacement de la machine de travail depuis la jonction entre les première et seconde gammes de vitesses de déplacement vers la jonction entre les seconde et troisième gammes de vitesses de déplacement

3. Procédé selon l'une des revendications 1 ou 2, **caractérisé en ce que** dans la seconde gamme de vitesses de déplacement, les roues arrière (5, 5') sont braquées de manière retardée sur un angle de braquage plus faible que celui déterminé par le braquage du volant (19).

4. Procédé selon la revendication 3, **caractérisé en ce que** dans la seconde gamme de vitesses de déplacement, la différence entre l'angle de braquage, sur lequel s'effectue le braquage retardé, et l'angle de braquage prédéterminé par le volant augmente continûment, en fonction de la vitesse de déplacement de la machine de travail, depuis la jonction entre les première et seconde gammes de vitesses de déplacement et la jonction entre les seconde et troisièmes gammes de vitesses de déplacement.

5. Procédé selon l'une des revendications 1 à 4, **caractérisé en ce que** dans une quatrième gamme de vitesses de déplacement de la machine de travail, qui est située au-dessous de la première gamme de vitesses de déplacement, la différence entre les vitesses de rotation au niveau des roues avant est supérieure à ce qui est nécessaire pour une concordance entre les centres instantanés de rotation théoriques des roue avant et des roues arrière.

6. Procédé selon l'une des revendications 1 à 5, **caractérisé en ce que** la vitesse de déplacement est réduite en fonction de l'amplitude du braquage et en fonction de la vitesse de déplacement.

7. Machine de travail autotractée, notamment machine agricole, comportant
- des roues avant non déviées pouvant être entraînées (4, 4', 104, 104', 204, 204', 304, 304', 404, 404', 504, 504', 604, 604'),
- des roues arrière orientables (5, 5', 105,105', 205, 205', 305, 305', 405, 405', 505, 505', 605, 605'),
- un moteur d'entraînement (8, 108, 208, 308, 408, 508, 608),
- une chaîne motrice, qui relie les roues avant (4, 4', 104, 104', 204, 204', 304, 304', 404, 404', 504, 504', 604, 604') selon une liaison motrice au moteur d'entraînement (8, 108, 208, 308, 408, 508, 608), et
- une unité de commande (15, 115, 215, 315, 415, 515, 615), **caractérisée en ce que** le braquage des roues arrière (5, 5', 105,105', 205, 205', 305, 305', 405, 405', 505, 505', 605, 605') et l'entraînement des roues avant (4, 4', 104, 104', 204, 204', 304, 304', 404, 404', 504, 504', 604, 604') peuvent être commandés par l'unité de commande conformément à un procédé selon les revendications 1 à 5.

8. Machine de travail selon la revendication 7, **caractérisée en ce que** la chaîne motrice comprend une pompe hydraulique (10) entraînée par un moteur d'entraînement (8), et que les roues avant (4, 4') sont entraînées respectivement par un moteur hydraulique (13, 13'), les moteurs hydrauliques (13, 13') étant alimentés par la pompe hydraulique (10).

9. Machine de travail selon la revendication 8, **caractérisée en ce que** l'amenée du liquide hydraulique pour l'alimentation des moteurs hydraulique (13, 13') est commandable par l'unité de commande (15).

10. Machine de travail selon la revendication 8, **caractérisée en ce qu'**aux roues avant (104, 104') sont associés respectivement des moyens de freinage (124, 124'), à l'aide desquels la roue avant respective (104, 104') peut être freinée d'une manière commandée par l'unité de commande (115).

11. Machine de travail selon la revendication 8, **caractérisée en ce que** les moteurs hydrauliques (213, 213') sont des moteurs de réglage, qui sont réglables l'unité de commande (215).

12. Machine de travail selon la revendication 7, **caractérisée en ce que** la chaîne motrice comprend deux pompes hydrauliques (310, 310') entraînées par le moteur d'entraînement (308), et que les roues avant (304, 304') sont entraînées respectivement par un moteur hydraulique (313, 313') des moteurs hydrauliques (213, 213') étant alimentés respectivement par l'une des pompes hydrauliques (310, 310').

13. Machine de travail selon la revendication 12, **caractérisée en ce que** les puissances des pompes hydrauliques (313, 313') sont commandables par l'unité de commande (315).

14. Machine de travail selon la revendication 7, **caractérisée en ce que** la chaîne motrice comprend des moyens mécaniques de transmission de force.

15. Machine de travail selon la revendication 14, **caractérisée en ce que** les moyens mécaniques de transmission de force
- comprennent une boîte de vitesses (424), qui est reliée selon une liaison motrice au moteur d'entraînement (408), et
- comprennent des arbres latéraux (425, 425'), qui sont reliés respectivement d'une part selon une liaison motrice au moteur d'entraînement (408) et d'autre part à une roue avant (404, 404').

16. Machine de travail selon les revendications 14 et 15, **caractérisée en ce qu'**à au moins une roue avant (504') est associé un mécanisme de superposition (526), au moyen duquel la vitesse de rotation d'un autre moteur (527), qui peut être commandé par l'unité de commande (515) peut être superposée à la vitesse de rotation de la roue avant respective (504').

17. Machine de travail selon la revendication 15, **caractérisée en ce que** des moyens de freinage, à l'aide desquels la roue avant respective (604, 604') peut être freinée, sont disposés respectivement dans le flux de force s'étendant depuis la boîte de vitesses (624) aux roues avant (604, 604').

18. Machine de travail selon la revendication 18, **caractérisée en ce que** les moyens de freinage sont représentés par un dispositif de blocage différentiel (625,625').

## Claims

1. A method of steering and driving a self-propelled implement, especially agricultural implements, having front wheels (4, 4') which are continuously drivable around a common axis of rotation, and having steerable rear wheels (5, 5'), wherein
- in the case of a steering lock of a steering wheel (19) of the implement, the front wheels (4, 4') are driven at different speeds, wherein the speed differential between the speeds of the front wheels (4, 4') is controlled as a function of the size and direction of the steering lock,
**characterised in that**
- within a first driving speed range of the implement, the rear wheels (5, 5') are steered as a function of the steering lock of the steering wheel (19) at a pre-determined steering angle relative to a central axis of the implement, so that the theoretical instantaneous centre of rotation of the front wheels (4, 4') is identical to the theoretical instantaneous centre of rotation of the rear wheels (5, 5');
- within a second driving speed range of the implement, which is above the first driving speed range, the rear wheels (5, 5'), in the case of a steering lock of the steering wheel (19), are steered so as to gradually follow said steering lock;
- within a third driving speed range of the implement, which is above the second driving speed range, the rear wheels (5, 5') are set so as to drive in a straight line without being steered.

2. A method according to claim 1,
**characterised in**
**that**, within the second driving speed range, the speed at which the rear wheels (5, 5') are steered so as to gradually follow the steering lock, as a function of the driving speed of the implement, continuously decreases, starting from the transition between the first and the second driving speed range to the transition between the second and the third driving speed range.

3. A method according to any one of claims 1 or 2,
**characterised in**
**that**, within the second driving speed range, the rear wheels (5, 5') are steered at a smaller steering angle than predetermined by the steering lock of the steering wheel (19).

4. A method according to claim 3,
**characterised in**
**that**, within the second driving speed range, the difference between the steering angle at which steering takes place and the steering angle predetermined by the steering wheel, as a function of the driving speed of the implement, increases continuously, starting from the transition between the first and second driving speed range to the transition between the second and third driving speed range.

5. A method according to any one of claims 1 to 4,
**characterised in**
**that**, within a fourth driving speed range of the implement, which is below the first driving speed range, the speed differential at the front wheels is higher than necessary to ensure that the theoretical instantaneous centres of rotation of the front wheels and of the rear wheels are superimposed on one another.

6. A method according to any one of claims 1 to 5,
**characterised in**
**that**, as a function of the size of the steering lock and as a function of the driving speed, the driving speed is reduced.

7. A self-propelled implement, especially an agricultural implement, having
- unsteered drivable front wheels (4, 4', 104, 104', 204, 204', 304, 304', 404, 404', 504, 504', 604, 604'),
- steerable rear wheels (5, 5', 105, 105', 205, 205', 305, 305', 405, 405', 505, 505', 605, 605'),
- a driving motor (8, 108, 208, 308, 408, 508, 608);
- a driveline which establishes a driving connection between the front wheels (4, 4', 104, 104', 204, 204', 304, 304', 404, 404' 504, 504', 604,604') and the driving motor (8, 208, 308, 408, 508, 608); and
- a control unit (15, 115, 215, 315, 415, 515, 615),
**characterised in that**
said control unit is suitable for controlling the steering of the rear wheels (5, 5', 105, 105', 205, 205', 305, 305', 405, 405', 505, 505', 605, 605') and the drive of the front wheels (4, 4', 104, 104', 204, 204', 304, 304', 404, 404' 504, 504', 604, 604') in accordance with a method according to one of claims 1 to 5.

8. An implement according to claim 7,
**characterised in**
**that** the driveline comprises a hydraulic pump (10) driven by the driving motor (8),
**that** the front wheels (4, 4') are each driven by a hydraulic motor (13, 13'), with the hydraulic motors (13, 13') being supplied by the hydraulic pump (10).

9. An implement according to claim 8,
**characterised in**
**that** the supply of hydraulic fluid to the hydraulic motors (13, 13') is controllable by the control unit (15).

10. An implement according to claim 8,
**characterised in**
**that** the front wheels (104, 104') are each associated with braking means (124, 124') by means of which the respective front wheel (104, 104') can be braked in a way controlled by the control unit (115).

11. An implement according to claim 8,
**characterised in**
**that** the hydraulic motors (213, 213') are adjustable motors which are adjustable by the control unit (215).

12. An implement according to claim 7,
**characterised in**
**that** the driveline comprises two hydraulic pumps (310, 310') driven by the driving motor (308), and
**that** the front wheels (304, 304') are each driven by a hydraulic motor (313, 313'), with the hydraulic motors (313, 313') each being supplied by one of the hydraulic pumps (310, 310').

13. An implement according to claim 12,
**characterised in**
**that** the power of the hydraulic pumps (313, 313') is controllable by the control unit (315).

14. An implement according to claim 7,
**characterised in**
**that** the driveline comprises mechanical power transmitting means.

15. An implement according to claim 14,
**characterised in**
**that** the mechanical power transmitting means comprise
- a drive (424) which, drivewise, is connected to the driving motor (408), and
- sideshafts (415, 425') which, drivewise, are connected to the drive (424) on the one hand and to a front wheel (404, 404') on the other hand

16. An implement according to any one of claims 14 and 15,
**characterised in**
**that** at least one front wheel (504') is associated with a superimposing drive (526) by means of which the speed of a further motor (527) controllable by the control unit (515) can be superimposed on the speed of the respective front wheel (504').

17. An implement according to claim 15,
**characterised in**
**that** within the power flow leading from the drive (624) to the front wheels (604, 604'), there are arranged braking means by means of which the respective front wheel (604, 604') can be braked.

18. An implement according to claim 17,
**characterised in**
**that** the braking means are provided in the form of a differential lock (625, 625').
